Europäisches Patentamt

(19) European Patent Office

Office européen des brevets

(11) Numéro de publication: **0 097 859**
**B1**

(12) **FASCICULE DE BREVET EUROPEEN**

(45) Date de publication du fascicule du brevet:
06.08.86

(51) Int. Cl.⁴: **C 21 B 7/20**

(21) Numéro de dépôt: 83105735.1

(22) Date de dépôt: 11.06.83

(54) **Dispositif d'entraînement d'une goulotte oscillante.**

(30) Priorité: 24.06.82 LU 84225

(43) Date de publication de la demande:
11.01.84 Bulletin 84/2

(45) Mention de la délivrance du brevet:
06.08.86 Bulletin 86/32

(84) Etats contractants désignés:
AT BE DE FR GB IT NL SE

(56) Documents cités:
DE - B - 2 927 316
FR - A - 2 283 227
FR - A - 2 292 943
GB - A - 2 063 435
LU - A - 82 173
US - A - 3 963 128

(73) Titulaire: PAUL WURTH S.A., 32 rue d'Alsace,
L-1122 Luxembourg (LU)

(72) Inventeur: Legille, Edouard, 165 rte de Trèves,
Luxembourg (LU)
Inventeur: Lonardi, Emile, 30 rte de Schouweiler,
Bascharage (LU)

(74) Mandataire: Meyers, Ernest et al, Office de Brevets
Freylinger & Associés 46 rue du Cimetière B.P. 1153,
L-1011 Luxembourg (LU)

## Description

La présente invention concerne un dispositif d'entraînement d'une goulotte oscillante pouvant pivoter autour de deux axes orthogonaux sous l'action d'un bras de commande pivotant ayant les mêmes degrés de liberté que la goulotte, comprenant un mécanisme de commande pour imprimer au bras de commande le mouvement que doit effectuer la goulotte, un dispositif de transmission pour reproduire le mouvement du bras de commande sur la goulotte et vice versa, dans lequel le mécanisme de commande est constitué par une tige d'entraînement susceptible de tourner autour de son axe longitudinal et d'être déplacée axialement et reliée, à cet effet, à deux moyens d'entraînement indépendants, l'extrémité de cette tige étant articulée sur un levier intermédiaire, articulé, à son tour, par l'intermédiaire d'une articulation universelle sur l'extrémité du bras de commande, de telle manière qu'un déplacement longitudinal de la tige de commande change l'inclinaison du bras de commande par rapport à un axe central confondu avec l'axe de ladite tige et qu'une rotation de celle-ci imprime un mouvement de précession conique du bras de commande autour dudit axe central.

Un dispositif de ce genre est décrit dans la demande de brevet fraçais FR-A-2 469 683, qui se rapporte, plus précisément, à un dispositif de distribution de la matière de chargement dans un haut fourneau. Dans un mode de réalisation préféré, le bras de commande est monté à l'extérieur de la tête du four et le dispositif de transmission est conçu de telle manière que la goulotte de distribution et le bras de commande soient toujours parallèles l'un à l'autre. Pour effectuer une distribution en cercles il suffit, par conséquent, de faire tourner le bras de commande autour d'un axe vertical parallèle à l'axe vertical du four autour duquel doit tourner la goulotte. Pour changer l'inclinaison de la goulotte, c'est-à-dire le rayon des cercles de dépôt de la matière de chargement, il suffit de changer l'inclinaison de ce bras de commande par rapport à son axe central de rotation.

Le levier intermédiaire et le bras de commande forment une charnière tournante à angle d'ouverture variable. C'est cet angle d'ouverture qui détermine l'inclinaison du bras de commande et celle de la goulotte par rapport à l'axe vertical.

Ce dispositif d'entraînement du bras de commande, aussi simple soit-il dans sa conception, a néanmoins l'inconvénient qu'il ne permet pas d'orienter la goulotte de distribution verticalement, c'est-à-dire de déverser la matière de chargement au centre de la surface de chargement. En effet, pour pouvoir amener la goulotte de distribution dans une telle position, il faudrait ouvrir la charnière formée par le levier intermédiaire et le bras de commande de 180°, c'est-à-dire que la tige d'entraînement, le levier intermédiaire et le bras de commande se retrouvent en alignement l'un sur l'autre. Il est bien entendu possible d'amener ces éléments dans cette position, mais, malheureusement, il n'est plus possible de les en dégager de façon contrôlée, car une poussée sur la tige d'entraînement, aussi forte soit-elle, ne permet pas une modification contrôlée de l'angle de la charnière lorsque celui-ci est de 180°.

Le but de la présente invention est d'éliminer cet inconvénient, autrement dit, de prévoir un dispositif d'entraînement du genre précité et modifié de telle manière que la goulotte de distribution puisse être orientée verticalement sans qu'elle reste bloquée dans cette position.

Pour atteindre cet objectif, l'invention propose un dispositif d'entraînement d'une goulotte oscillante du genre décrit dans le préambule, essentiellement caractérisé en ce que ladite articulation universelle comporte un bloc de raccord relié par deux tourillons au levier intermédiaire et pourvu d'un alésage, dans lequel est engagé coaxialement la tête du bras de commande de façon que les axes de l'alésage et des tourillons soient orthogonaux mais décalés entre eux.

Cette conception permet à la goulotte d'être orientée verticalement en ouvrant, par déplacement longitudinal de la tige d'entraînement, au maximum la charnière constituée par le levier intermédiaire et le bras de commande et d'amener ce dernier dans la prolongation de la tige d'entraînement sur ledit axe central. Dans cette position, l'axe des tourillons reste d'un côté de l'axe central, ce qui permet de refermer ladite charnière par déplacement longitudinal de la tige d'entraînement, les tourillons d'articulation de la charnière s'écartant obligatoirement d'avantage dudit axe central.

D'autres particularités et caractéristiques ressortiront de la description détaillée d'un mode de réalisation avantageux présenté ci-dessous, à titre d'illustration, en référence aux figures annexées et dans lesquelles:

la figure 1 montre schématiquement une vue latérale, partiellement en coupe, d'un dispositif d'entraînement connu tel que décrit dans la demande de brevet français précitée FR-A-2 469 683,

la figure 2 montre une vue partielle en coupe suivant le plan de coupe II–II sur la figure 1,

la figure 3 est une vue analogue à celle de la figure 1 montrant la position que doit occuper le dispositif d'entraînement pour que la goulotte de distribution soit orientée verticalement,

les figures 4, 5 et 6 montrent des vues correspondant à celles illustrées respectivement par les figures 1, 2 et 3 d'un dispositif d'entraînement modifié conformément à la présente invention.

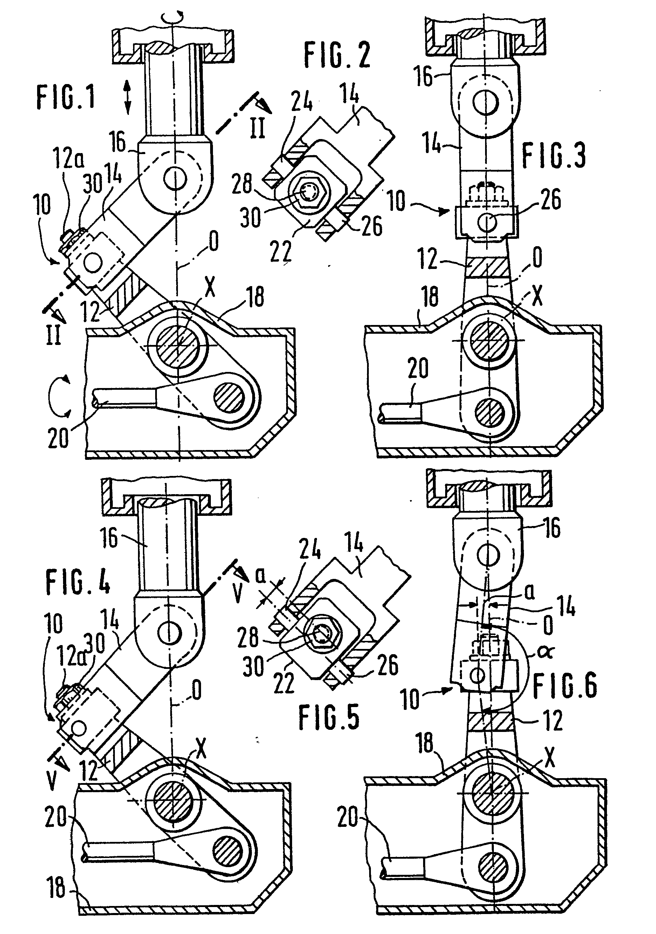

Sur les différentes figures on a utilisé les mêmes chiffres de référence pour désigner des éléments correspondants. Sur la figure 1, on distingue une charnière 10 à angle d'ouverture variable et pouvant tourner autour d'un axe vertical 0. Cette charnière est constituée d'un bras de commande 12 pivotant autour d'un axe X perpendiculaire au plan de la feuille et d'un levier intermédiaire 14. Le bras de comamnde 12 est relié au moyen d'un mécanisme de transmission approprié à une goulotte de distribution non montrée sur les figures.

Ce mécanisme de transmission est de préférence du genre de celui proposé dans la demande de brevet européen EP 0062 769, c'est-à-dire qu'il est constitué d'une barre de transmission 20, actionné par le bras de commande pivotant 12 et évoluant à l'intérieur d'une fourche étanche 18 qui est susceptible de pivoter autour de son axe longitudinal.

Le levier intermédiaire 14 est relié à une tige d'entraînement 16 actionnée, à son tour, par des moyens d'entraînement appropriés, non montrés, et susceptibles de faire tourner la tige 16 autour de l'axe 0 et/ou de la déplacer longitudinalement le long de cet axe, mouvement qui provoque respectivement la rotation de la charnière 10 autour de l'axe 0 et/ou une modification de son angle d'ouverture.

La transformation de ce mouvement de précession conique du bras de commande 12 autour de l'axe 0 en mouvement correspondant de la goulotte de distribution est expliquée plus en détail dans les deux demandes de brevet précitées et on se réfèrera à celles-ci pour ces explications supplémentaires.

L'articulation universelle de la charnière 10 entre le bras intermédiaire 14 et le bras de commande 12 doit être conçue de manière à permettre une modification de l'angle d'ouverture de la charnière par coulissement de la tige d'entraînement 16 ainsi qu'un pivotement relatif entre le bras de commande 12 et le levier 14 autour de l'axe longitudinal du bras de commande 12. La figure 2 illustre un mode de réalisation d'une telle articulation. Dans ce mode de réalisation, l'extrémité inférieure du levier intermédiaire 14 est conçue en forme de fourche entre les deux branches de laquelle se trouve un bloc de raccord 22 porté par deux tourillons 24 et 26 dans les deux branches de la fourche du levier 14. Ce bloc de raccord 22 peut donc pivoter autour de l'axe des tourillons 24 et 26 par rapport au levier 14 et vice versa.

Le bloc de raccord 22 comporte, en outre, un alésage central 28 dont l'axe est perpendiculaire à l'axe des tourillons 24 et 26. Dans cet alésage est engagée une tête cylindrique 12a formant l'extrémité supérieure du bras de commande 12 et permettant, de ce fait, une rotation relative entre cette tête cylindrique 12a et l'alésage 28. Pour maintenir le bras de commande 12 dans le bloc de raccord 22, on peut prévoir un filetage sur l'extrémité de la tête 12a afin d'y placer un écrou et un contre-écrou, tel que représenté en 30.

Pour orienter la goulotte de distribution verticalement, il est nécessaire de relever la tige d'entraînement 16 jusqu'à ce que la charnière 10 soit complétement ouverte et occupe la position selon la figure 3, c'est-à-dire que la tige d'entraînement 16, le levier intermédiaire 14 et le bras de commande 12 sont alignés coaxialement sur l'axe 0. Malheureusement, à partir de la position selon la figure 3, il n'est plus possible de revenir de façon contrôlée à une configuration, par exemple, selon la figure 1 par simple poussée sur la tige d'entraînement 16.

Pour remédier à cet inconvénient, l'invention propose la modification illustrée par les figures 4, 5 et 6 montrant, en principe, les mêmes éléments que les figures 1 à 3. La différence essentielle réside, toutefois, dans le décalage de l'axe des tourillons 24 et 26 par rapport à l'axe de l'alésage 28 qui correspond à l'axe longitudinal du bras de commande 12. Comme, en effet, il ressort nettement de la figure 5, l'axe des tourillons 24 et 26 se trouvent à une distance «a» de l'axe de l'alésage 28 dans le bloc de raccord 22.

L'effet de cette disposition ressort clairement de la figure 6 qui montre qu'en plaçant la goulotte verticalement l'axe des tourillons 24 et 26 reste à une distance «a» de l'axe 0. Autrement dit, en position verticale de la goulotte, l'angle de la charnière 10 ne peut pas devenir supérieure à un angle α qui est inférieur à 180°. Ceci permet de descendre la tige d'entraînement 16 à partir de la position de la figure 6 pour réduire l'angle de la charnière 10, c'est-à-dire augmenter l'inclinaison du bras de commande 12 par rapport à l'axe 0 et relever, en conséquence, la goulotte de distribution.

Il est à souligner que la disposition selon les figures 4 à 6 ne perturbe en aucune manière la transmission du mouvement du bras de commande 12 sur la goulotte de distribution.

Il est également à noter que, dans le but de réduire le frottement au niveau de la tête cylindrique 12a et de l'alésage 28, il est possible de prévoir un roulement.

## Revendication

1. Dispositif d'entraînement d'une goulotte oscillante pouvant pivoter autour de deux axes orthogonaux sous l'action d'un bras de commande pivotant ayant les mêmes degrés de liberté que la goulotte, comprenant un mécanisme de commande pour imprimer au bras de commande le mouvement que doit effectuer la goulotte, un dispositif de transmission pour reproduire le mouvement du bras de commande sur la goulotte et vice versa, dans lequel le mécanisme de commande est constitué par une tige d'entraînement susceptible de tourner autour de son axe longitudinal et d'être déplacé axialement et relié, à cet effet, à deux moyens d'entraînement indépendants, l'extrémité de cette tige étant articulée sur un levier intermédiaire, articulé, à son tour, par l'intermédiaire d'une articulation universelle sur l'extrémité du bras de commande, de telle manière qu'un déplacement longitudinal de la tige de commande change l'inclinaison du bras de commande par rapport à un axe central confondu avec l'axe de ladite tige et qu'une rotation de celle-ci imprime un mouvement de précession conique du bras de commande autour dudit axe central, caractérisé en ce que ladite articulation universelle comporte un bloc de raccord (22) relié par deux tourillons (24, 26) au levier intermédiaire (14) et pourvu d'un alésage (28), dans lequel est engagée coaxialement la tête (12a) du bras de commande (12) de façon que les axes de l'alésage (28) et des tourillons (24, 26) soient orthogonaux mais décalés entre eux.

**Patentanspruch**

Vorrichtung zum Antrieb einer schwenkbaren Verteilerschurre, die unter dem Einfluss eines schwenkbaren Antriebsarmes mit demselben Beweglichkeitsgrad wie die Schurre um zwei orthogonale Achsen schwenkbar ist, begreifend einen Antriebsmechanismus, um dem Antriebsarm die von der Schurre auszuführende Bewegung aufzuprägen, eine Transmissionsvorrichtung zum Übertragen der Antriebsarmbewegung auf die Schurre und umgekehrt, wobei der Antriebsmechanismus aus einer um ihre Längsachse drehbaren und axial verlagerbaren Antriebsstange besteht, und zu diesem Zweck mit zwei unabhängigen Antriebsmitteln verbunden ist, wobei das Ende dieser Stange auf einem Zwischenhebel schwenkbar ist, und dieser seinerseits mit Hilfe eines Universalgelenks auf dem Ende des Antriebsarms derart schwenkbar ist, dass eine Längsverschiebung der Antriebsstange die Neigung des Antriebsarms gegenüber einer Zentralachse, welche die Achse besagter Stange ist, ändert, und dass eine Rotation dieser Stange eine konische Präzessionsbewegung des Antriebsarms um besagte Zentralachse aufprägt, dadurch gekennzeichnet, dass besagtes Universalgelenk einen Verbindungsblock (22) begreift, der von zwei Zapfen (24, 26) mit dem Zwischenhebel (14) verbunden ist und mit einer Bohrung (28) versehen ist, in die der Kopf (12a) des Antriebsarms (12) koaxial derart eingepasst ist, dass die Achse der Bohrung (28) und der Zapfen (24, 26) senkrecht, aber zueinander versetzt sind.

**Claim**

1. Apparatus for driving an oscillating spout capable of pivoting about two orthogonal axes under the action of a pivoting control arm having the same degrees of liberty as the spout, comprising a control mechanism serving to cause the control arm to perform the movement required from the spout, a transmission device serving to cause the movement of the control arm to be reproduced by the spout and vice-versa, wherein the control mechanism consists of a driving rod capable of turning about its longitudinal axis and undergoing axial displacement and connected for this purpose to two independent driving means, the end of this rod being articulated to an intermediate lever articulated in its turn via a universal joint to the end of the control arm, in such a way that a longitudinal displacement of the control rod changes the angle of inclination of the control arm in relation to a central axis identical with the axis of the said rod and that a rotation of the latter causes a conical precession movement of the control arm about the said central axis, characterized in that the said universal joint comprises a connecting block (22) connected by two journals (24, 26) to the intermediate lever (14) and provided with a boring (28) in which the head (12a) of the control arm (12) engages coaxially, in such a way that the axes of the boring (28) and of the journals (24, 26) are orthogonal but offset in relation to one another.

FIG.1

FIG.2

FIG.3

FIG.4

FIG.5

FIG.6